(19) Europäisches Patentamt
European Patent Office
Office européen des brevets

(11) **EP 2 398 159 B1**

(12) **EUROPEAN PATENT SPECIFICATION**

(45) Date of publication and mention
of the grant of the patent:
**22.08.2012 Bulletin 2012/34**

(51) Int Cl.:
*H04L 5/00* (2006.01)          *H04L 25/02* (2006.01)
*H04B 7/08* (2006.01)

(21) Application number: **10290324.2**

(22) Date of filing: **15.06.2010**

(54) **Receiver and method for suppressing spatial interferences using virtual antenna extension**

Empfänger und Verfahren zur Unterdrückung räumlicher Interferenzen anhand virtueller Antennenerweiterung

Récepteur et procédé de suppression d'interférences spatiales à l'aide d'extension virtuelle des antennes utilisées

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.12.2011 Bulletin 2011/51**

(73) Proprietor: **Alcatel Lucent**
**75007 Paris (FR)**

(72) Inventor: **Chen, Yejian**
**70191 Stuttgart (DE)**

(74) Representative: **Wetzel, Emmanuelle et al**
**Alcatel-Lucent Deutschland AG**
**Intellectual Property & Corporate Standards**
**Lorenzstrasse 10**
**70435 Stuttgart (DE)**

(56) References cited:
**US-A1- 2004 104 844     US-A1- 2005 276 361**
**US-A1- 2007 164 902**

• **YIPING WANG ET AL: "Augmented antenna arrays for CDMA cellular systems", IEEE 46TH VEHICULAR TECHNOLOGY CONFERENCE, 1996 - MOBILE TECHNOLOGY FOR THE HUMAN RACE, vol. 2, 28 April 1996 (1996-04-28), - 1 May 1995 (1995-05-01), pages 1091-1095, XP010162558, ISBN: 978-0-7803-3157-0**

## Description

### Field of the Invention

The invention relates to a method of operating a receiver.

The invention further relates to a receiver for receiving a signal via a plurality of receive channels, each of which is associated with a physical antenna.

### Background

Radio signals transmitted over an air interface to a wireless communications device suffer typically from interference caused by radio signals originating from further wireless communication systems operating with the same radio resources. If the interference is not mitigated at the receiver side, successful recovery of transmitted data may not be possible at the receiver. Additionally, interference typically sets a limit for the capacity of a radio telecommunications system.

Accordingly, there is a need to provide a more sophisticated method of operating a receiver and a receiver which enables improved interference mitigation.

US 2004/0104844 A1 discloses an antenna array including virtual antenna elements, wherein the physical elements of the antenna array are positioned sufficiently near each other to enable synthesis of a polynomial or other mathematical expression characterizing the response of the array to receipt of an incident waveform.

Summary

According to the present invention, regarding the above mentioned method of operating a receiver, this object is achieved by:

- estimating a direction of arrival of a signal received by said receiver,
- determining a channel vector representing a plurality of receive channels of said receiver,
- determining a mean channel response based on said channel vector,
- providing an extended channel vector, which comprises the elements of said channel vector and at least one further channel vector element, said further channel vector element representing a virtual antenna of said receiver,
- performing a step of spatial interference suppression based on said extended channel vector.

Further, according to the present invention, the receiver determines a quality measure, preferably a SINR value, characterizing communications performance associated with a specific first mobile terminal, and the steps of determining a mean channel response, providing an extended channel vector, and performing a step of spatial interference suppression based on said extended channel vector are only performed if said SINR value is determined to be smaller than a predetermined first threshold.

The inventive introduction of one or more virtual antennas and corresponding channel vector elements, which lead to an extended channel vector, advantageously enable to increase the spatial dimension of a weight vector used by the receiver for spatial interference suppression, which introduces more degrees of freedom to suppress the undesired interference and thus potentially improves interference suppression.

I.e., by adopting the inventive approach, improved interference suppression is possible, thus eliminating the need for reallocating radio resources of different independent wireless communication systems. This advantageously avoids the problem of independent wireless communication systems having to reallocate radio resources repeatedly in an uncoordinated manner which introduces unwanted overhead.

According to a preferred embodiment, said mean channel response is determined based on the equation:

$$h_0 = \frac{1}{K} \sum_{k=1}^{K} \mathbf{h}[k] \, ,$$

wherein K is a number of physical receive channels of said receiver, i.e. the number of physical antennas used for receiving a signal.

According to a further embodiment, a further channel vector element, which represents a virtual antenna, is determined based on the equation: $h_k = h_0 \exp(jk\pi \sin\theta)$, wherein j is the imaginary unit, k is a phase factor corresponding to said virtual antenna, and θ is said direction of arrival.

According to another preferred embodiment, said extended channel vector is obtained based on the equation:

$$\mathbf{h}_{VA,0} = \begin{bmatrix} \mathbf{h}^T & h_0 \exp(jk_1\pi\sin\theta) & \cdots & h_0 \exp(jk_i\pi\sin\theta) & \cdots & h_0 \exp(jk_M\pi\sin\theta) \end{bmatrix}^T ,$$

wherein $k_i$ is a phase factor corresponding to said $k_i$-th virtual antenna, with $1 \leq i \leq M$, $\theta$ is said direction of arrival, j is the imaginary unit, and M is the number of virtual antennas.

According to another preferred embodiment, a weighting term for said step of spatial interference suppression at the receiver side is determined based on the equation:

$$\mathbf{w}^H = \mathbf{h}_{VA,0}{}^H (\mathbf{h}_{VA,0}\mathbf{h}_{VA,0}{}^H + \mathbf{H}_{VA,i}\mathbf{H}_{VA,i}{}^H + \sigma^2\mathbf{I})^{-1} ,$$

wherein $\mathbf{h}_{VA,0}$ is said extended channel vector, wherein $h_{VA,0}{}^H$ is the Hermitian extended channel vector, wherein $\mathbf{H}_{VA,i}$ is a channel response matrix of interference, wherein $\mathbf{H}_{VA,i}{}^H$ is the Hermitian channel response matrix of interference, wherein $\sigma^2$ represents a standard deviation of noise, and wherein I represents the identity matrix.

According to a further embodiment, the receiver has four physical receive channels corresponding with four physical antennas, and wherein four virtual antennas are assigned to said receiver. The assignment of four additional virtual antennas to the receiver advantageously enables to introduce further degrees of freedom in the course of spatial interference suppression at the receiver side.

A further solution to the object of the present invention is given by a receiver for receiving a signal via plurality of receive channels, each of which is associated with a physical antenna, according to claim 11. Said receiver comprises processing means configured to:

- estimate a direction of arrival of a signal received by said receiver,
- determine a channel vector representing said plurality of receive channels of said receiver,
- determining a mean channel response based on said channel vector,
- provide an extended channel vector which comprises the elements of said channel vector and at least one further channel vector element, said further channel vector element representing a virtual antenna of said receiver and to
- perform a step of spatial interference suppression based on said extended channel vector.

Further advantageous embodiments of the invention are given in the dependent claims.

**Brief Description of the Figures**

Further features, aspects and advantages of the present invention are given in the following detailed description with reference to the drawings in which:

Figure 1      depicts a scenario involving five wireless communications systems for application of the inventive method,

Figure 2a      depicts the scenario of Figure 1 with focus on a user allocation in a first frequency band,

Figure 2b      depicts the scenario of Figure 1 with focus on user allocation in a second frequency band,

Figure 2c      depicts the scenario of Figure 1 with focus on user allocation in a third frequency band,

Figure 3      depicts a simplified block diagram of an embodiment of a receiver,

Figure 4      depicts a simplified flow chart of an embodiment of a method of receiving,

Figure 5      depicts a distribution of a signal to a noise plus interference ratio as obtained by various configurations,

Figure 6      depicts an uplink data transmission configuration according to an embodiment,

Figure 7      depicts a further uplink data transmission configuration according to an embodiment,

Figure 8        illustrates phase differences between different antennas according to an embodiment,

Figure 9        depicts a simplified flow chart according to a further embodiment of a method of receiving, and

Figure 10       depicts a simplified flow chart according to a further embodiment of a method of receiving.

**Description of the Embodiments**

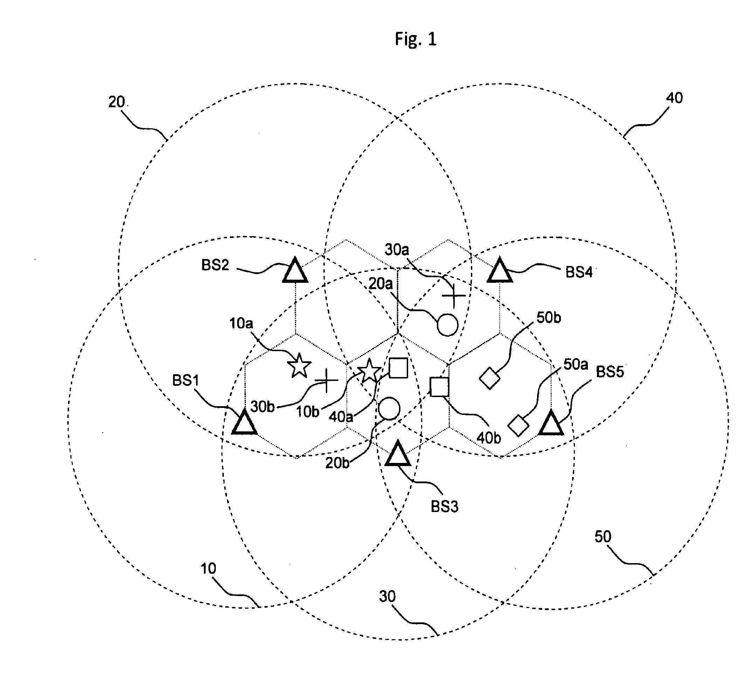

Figure 1 depicts a communications infrastructure which comprises five independent radio frequency communications systems. Each of the five systems comprises a base station BS1, BS2, BS3, BS4, BS5. A radio coverage area of the respective base station BS1, BS2, BS3, BS4, BS5 is also depicted in Figure 1 by the dashed circles 10, 20, 30, 40, 50.
As can be gathered from Figure 1, the radio coverage areas 10, 20, 30, 40, 50 of the independent communications systems overlap to some degree which leads to interference as disclosed in detail below.
The first radio frequency communications system comprises base station BS1 with its radio coverage area 10. Moreover, two mobile terminals 10a, 10b, which are depicted by star-shaped elements in Figure 1, are also part of the fist communications system.
Likewise, the second communications system comprises base station BS2, its radio coverage area 20 and two mobile terminals 20a, 20b, which are symbolized by circles in Figure 1.
Moreover, the third communications system comprises base station BS3, its radio coverage area 30, and two further mobile terminals 30a, 30b, symbolized by cross-shaped elements in Figure 1.
The fourth communications system comprises base station BS4, its radio coverage area 40, and two mobile terminals 40a, 40b, which are depicted by squares in Figure 1.
Finally, the fifth communications system comprises base station BS5, its radio coverage area 50, and two mobile terminals 50a, 50b which are symbolized by a rhombus.
The scenario depicted by Figure 1 may e.g. be considered as a decentralized cognitive radio communications infrastructure, wherein the five different communications systems are deployed and operating completely independently of each other. Particularly, resource allocation is performed by the respective base station only for its own mobile terminals, e.g. by base station BS1 for the terminals 10a, 10b. This user allocation is independently performed for each communications system, and no information on user or radio resource allocation is shared with the further communications systems.
For the present embodiment, in an exemplary and nonlimiting fashion, it is assumed that three frequency bands are available for resource allocation by each of the five communications systems. I.e., each base station BS1, BS2, BS3, BS4, BS5 may allocate and use one or more of the three frequency bands for communication with its respective terminals. According to the present scenario, which depicts a concentration of all mobile terminals 10a, 10b, .. 50a, 50b within a central area encircled by the base stations BS1, BS2, BS3, BS4, BS5, the central area may also be considered as a "hot spot" in that the mobile terminals of each system are not equally distributed over the aggregated radio coverage areas 10, 20, 30, 40, 50, but are rather concentrated within the hot spot area which is symbolized by five hexagonally-shaped areas in Figure 1.
For the further explanations of the present embodiment, it is assumed that frequency allocation of each system is initially performed on a random basis. Moreover, the number of receive antennas of each base station BS1, BS2, BS3, BS4, BS5 or its associated receiver, respectively, is assumed to be four.

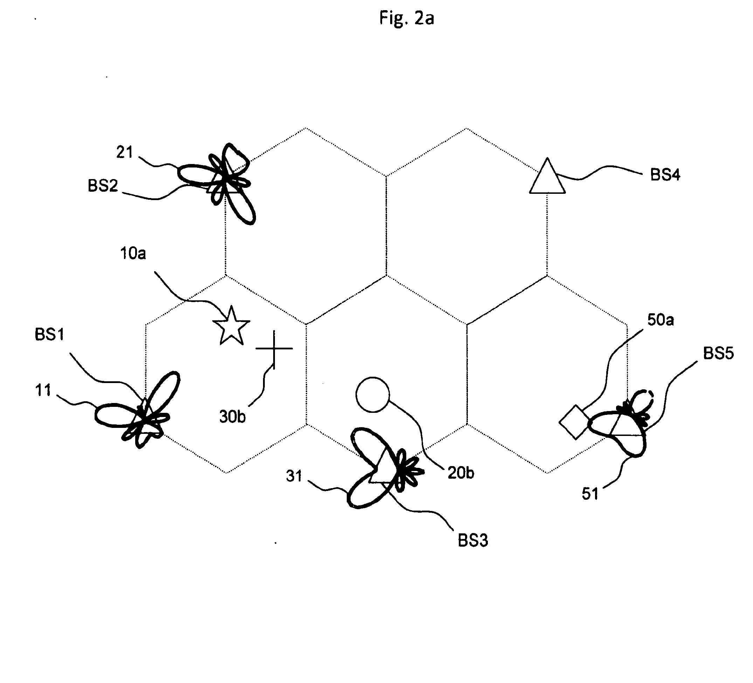

Figure 2a depicts a user allocation in a first of the aforementioned three frequency bands. As such, Figure 2a displays those components of the scenario according to Figure 1, which are actively operating at least within the first frequency band. As can be seen from Figure 2a, mobile terminal 10a is allocated to the first frequency band by its base station BS1. Additionally, a characteristic 11 of the base station 1 or its receiver antenna system, respectively, is depicted by Figure 2a. From the characteristic 11 of base station 1 it can be determined that a main lobe is directed to the mobile terminal 10a.
Base station BS2 also has allocated the first frequency band to its mobile terminal 20b. A corresponding characteristic of the antenna system of base station BS2 is also depicted by Figure 2a, cf. reference numeral 21.
Moreover, base station BS3 has allocated its mobile terminal 30b to the first frequency band, too. Correspondingly, its characteristic 31 comprises a main lobe in the direction of mobile terminal 30b.
Base station BS4 has currently not allocated any mobile terminal to the first frequency band, and thus no characteristic of its receiver antenna system is depicted in Figure 2a.
Base station BS5 has allocated its mobile terminal 50a to the first frequency band and comprises a correspondingly shaped characteristic 51.
As a result of the frequency allocation explained above with reference to Figure 2a, which has been performed on a random basis by the five independent communications systems independently of each other, mobile terminal 10a suffers from interference which is introduced by the radio communication between base station BS3 and its mobile terminal 30b, which is located in proximity to mobile terminal 10a of base station BS1.

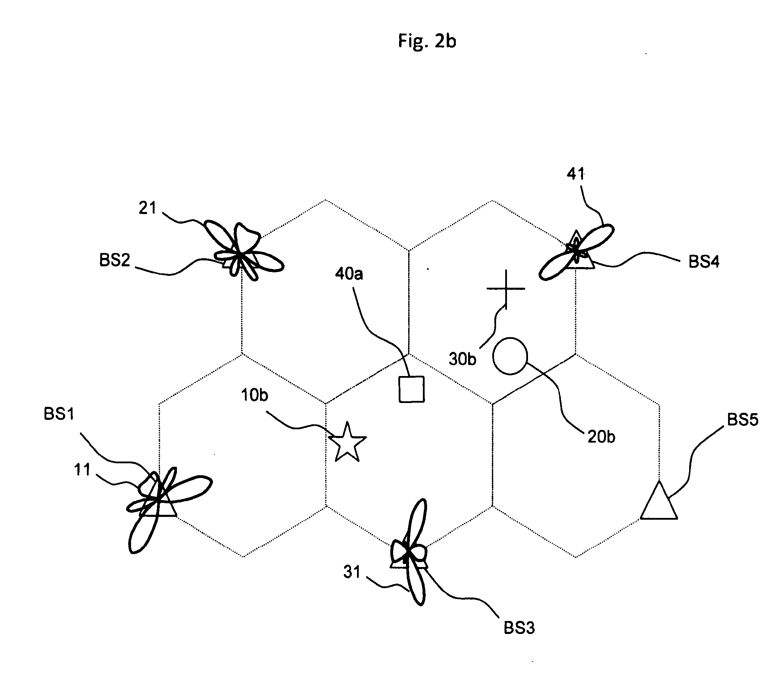

In analogy to Figure 2a, Figure 2b depicts the scenario of Figure 1 with respect to frequency allocation in a second frequency band. As with the first frequency band, the frequency allocation to the second frequency band has also been performed by the base stations BS1, BS2, BS3, BS4, BS5 on a random basis and particularly independently of each other.

As a result, a mobile terminal 10b of base station BS1 is allocated to the second frequency band, cf. Figure 2b. Moreover, mobile terminal 20b of base station BS2 is also allocated to the second frequency band. The same holds true for mobile terminals 30b of base station BS3 and 40a of base station BS4.

As already explained with reference to Figure 2a, Figure 2b also depicts the antenna characteristics of the base stations BS1, BS2, BS3, BS4 which have currently allocated at least one mobile terminal to the second frequency band.

As can be gathered from Figure 2b, the mobile terminal 30b of base station BS3 most probably suffers from interference which is introduced by mobile terminal 20b of base station BS2.

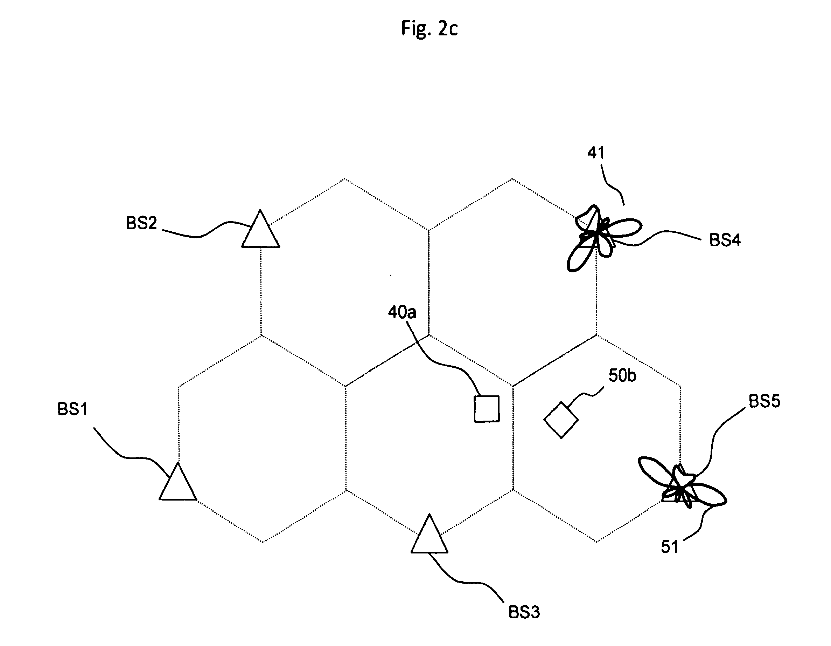

Figure 2c depicts the scenario of Figure 1 with reference to frequency allocation in a third of the three available frequency bands. Mobile terminal 40a of base station BS4 is assigned to the third frequency band, and mobile terminal 50b of base station BS5 is assigned to the third frequency band, too.

As a consequence, mobile terminal 40a, expectedly, suffers from interference introduced by the radio communication between base station BS5 and mobile terminal 50b, because mobile terminal 40a of base station BS4 is in a spatial range also covered by a main lobe of the characteristic 51 of the antenna system of base station BS5.

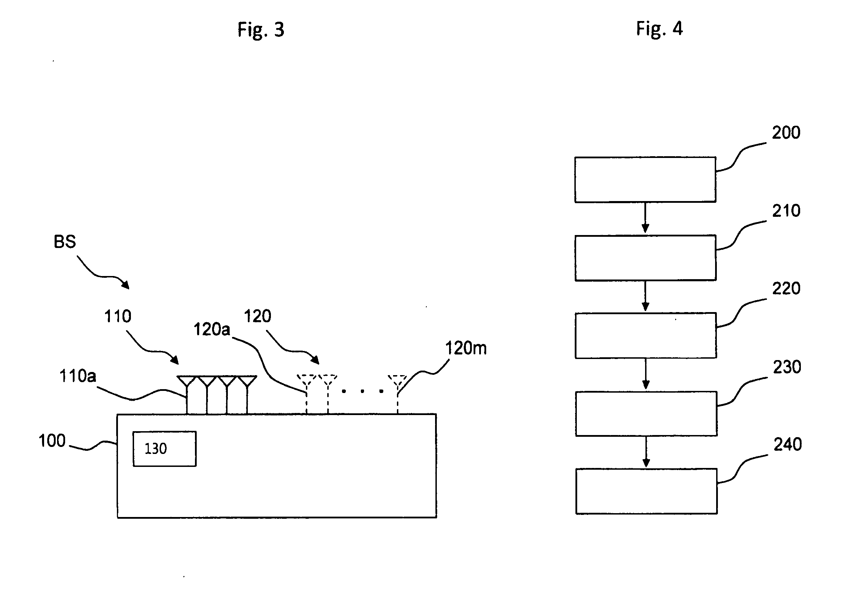

In order to mitigate the aforementioned interference effects which are imparted on each other by the independently operated communications systems, a base station, more precisely its receiver, according to a preferred embodiment is configured to perform a method of interference suppression which will be explained below with reference to the flowchart of Figure 4.

In this context, Figure 3 depicts a simplified block diagram of a base station BS and its receiver 100 that is configured to perform the method illustrated by the flowchart of Figure 4. For instance, each of the five base stations BS1, BS2, BS3, BS4, BS5, depicted by Figure 1 may comprise a structure and functionality comparable to base station BS depicted by Figure 3.

Base station BS comprises an antenna system 110 which according to the present embodiment comprises four physical antennas, only the first of which is denoted by reference 110a in Figure 3.

The receiver 100 comprises processing means 130 which may e.g. comprise a microprocessor or a digital signal processor (DSP) that is configured to control the operation of the receiver 100 in a per se known manner.

Additionally, the processing means 130 are configured to perform one or more embodiments of receiving methods according to the present invention which are explained below with reference to Figure 4 to Figure 10.

According to an embodiment, a first step 200 of the receiving method illustrated by Figure 4 comprises estimating a direction of arrival θ of a signal received by said receiver 100 (Figure 3). The step of estimating the direction of arrival θ can be performed by the processing means 130 depending on radio frequency signals received via the antenna array 110 in the following manner.

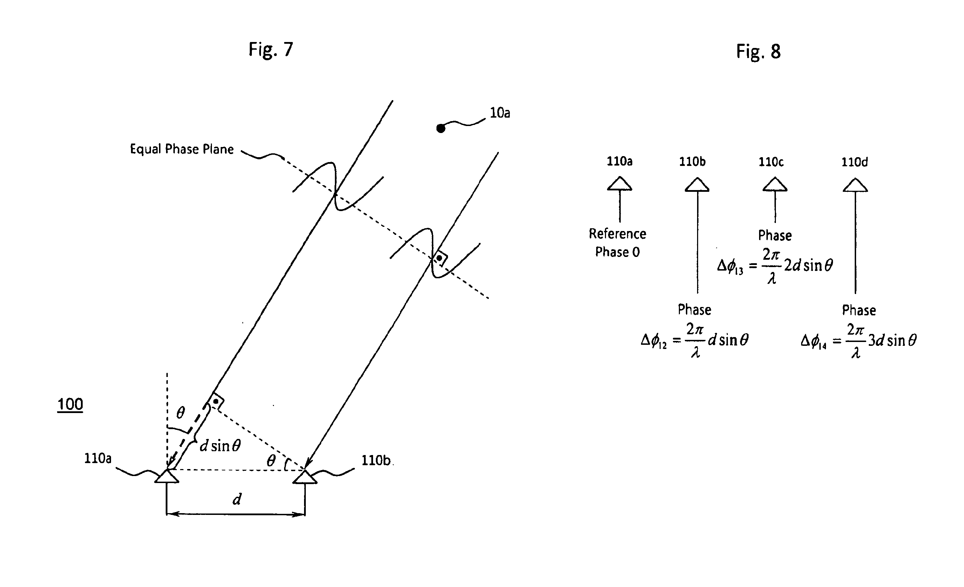

Figure 7 exemplarily depicts an uplink data transmission configuration, wherein a mobile terminal 10a transmits electromagnetic waves to a receiver 100 (e.g. a receiver of a base station BS) which comprises two physical antennas 110a, 110b. Since mobile terminal 10a is located sufficiently far away from receiver 100, the equal phase plains of electric and magnetic waves can be considered to extend orthogonally to the propagation direction, i.e. the direction from mobile terminal 10a to receiver 100. The phase difference between the first physical antenna 110a and the second physical antenna 110b of receiver 100 corresponds to the dashed arrow of Figure 7 having a length of $d\sin\theta$, wherein d is the geometrical distance between the antennas 110a, 110b, θ is an angle representing the Direction of Arrival (DOA) of the signals at the receiver 100.

The phase difference of the signals received by the antennas 110a, 110b can be determined by

$$\Delta\phi_{12} = \frac{2\pi}{\lambda} d \sin\theta \ , \quad -90° < \theta < 90° \ ,$$

Wherein λ stands for the wavelength of the carrier frequency, and θ denotes the Direction of Arrival. In the illustration in Fig. 7, Antenna 110b has the advanced phase. In the general case, this depends on θ, namely Antenna 110b has the advanced phase for 0<θ<90°, and Antenna 110b has lagged phase for -90° < θ < 0° . The conclusion can be extended for antenna arrays with multiple elements.

Fig. 8 illustrates the phase difference between an arbitrary receive antenna 110b, 110c, 110d and the reference antenna 110a (Fig. 7). A so-called array steering vector s can be introduced as

$$\mathbf{s}(\theta) = \begin{bmatrix} 1 & e^{j\frac{2\pi}{\lambda}d\sin\theta} & e^{j\frac{2\pi}{\lambda}2d\sin\theta} & e^{j\frac{2\pi}{\lambda}3d\sin\theta} \end{bmatrix}^{T}.$$

Especially, if a half-wavelength antenna array is deployed, wherein the distance d of linearly arranged neighbouring antennas 110a 110b is $d = \dfrac{\lambda}{2}$, it yields

$$\mathbf{s}(\theta) = \begin{bmatrix} 1 & e^{j\pi\sin\theta} & e^{j2\pi\sin\theta} & e^{j3\pi\sin\theta} \end{bmatrix}^{T}.$$

After said step of estimating 200 (Figure 4), i.e. performing the DoA estimation, which yields the angle θ, a channel vector h is determined, step 210 of Figure 4, said channel vector representing a plurality of receive channels of said receiver 100 depicted by Fig. 3.

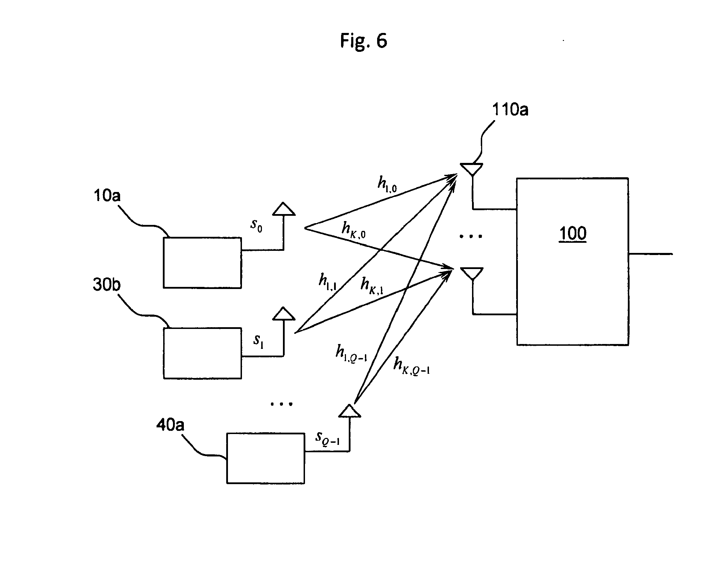

For illustration purposes, Figure 6 depicts an uplink data transmission configuration from different mobile terminals 10a, 30b, .., 40a to the receiver 100.

Each mobile terminal 10a, 30b, .., 40a is associated a signal $S_0$, $S_1$ .. , $S_{Q-1}$, wherein only signal so of mobile terminal 10a is considered as a signal of interest by receiver 100 i.e., the remaining $Q$ -1 many mobile terminals 30b, .., 40a, are considered as interferers.

Since receiver 100 comprises a plurality of physical antennas such as e.g. four antennas 110a, .., the configuration of Figure 6 may also be considered as a MIMO (multi input multi output) system. Especially, the system is a *Qx K* MIMO system, because receiver 100 has K many physical receive antennas, in the present example *K* = 4, and there are *Q* many transmitters, i.e. terminals 10a, ..

Each transmitter 10a, .. has a single transmit antenna, cf. Figure 6.

This configuration leads to *QxK* many transmission channels from the mobile terminals 10a, .., 30b to the receiver 100, which denote corresponding arrows of Figure 6.

The determination 210 of the channel vector **h** may - in a per se known manner - e.g. be performed with respect to pilot or so called sounding signalling, let the pilot based channel estimates be denoted by $\mathbf{h}_0$. Then the DoA θ can be estimated straightforward by evaluating the Eigen-vector of matrix $\mathbf{h}_0\mathbf{h}_0{}^{H}$. A rotated channel vector, which accounts for the influence of the antenna array steering vector **S** can be computed by $\mathbf{h}=\text{diag}[\mathbf{S}^{H}(\theta)]\,\mathbf{h}_0$.

After that, in step 220 of Fig. 4, a mean channel response $\mathbf{h}_0$ is determined based on said rotated channel vector **h**, which is preferably accomplished based on the equation: $h_0 = \dfrac{1}{K}\sum_{k=1}^{K}\mathbf{h}[k]$, wherein h[k] is the *k*-th element of the channel vector **h**, *K* is the number of receive channels associated with physical antennas 110, i.e. presently **K** =4. Especially in the case of high correlation, the elements of the channel vector can be averaged as given by the preceding equation.

In step 230 (Figure 4), an extended channel vector $\mathbf{h}_{VA,0}$ is provided. In contrast to conventional receiving methods, which employ the channel vector as obtained by step 210, according to an embodiment, the extended channel vector $\mathbf{h}_{VA,0}$ is obtained by combining the elements of the conventional channel vector $\mathbf{h}_0$ and - in addition - at least one further channel vector element $h_k$, wherein said further channel vector element $h_k$ represents a virtual antenna 120 of said receiver 100.

The further channel vector element $h_k$ can be obtained according to: $h_k=h_0 \exp(jk_1\pi\sin\theta)$, wherein j is the imaginary unit, $k_1$ is a phase factor corresponding to said first antenna element 120a of the virtual antenna arrangement 120, and θ is said direction of arrival. The additional virtual antennas considered by the method according to an embodiment are generally symbolized by reference numeral 120 in Figure 3, wherein a first virtual antenna is denoted by reference sign 120a, and an m-th virtual antenna is denoted by reference sign 120m.

The phase factor $k_1$ depends on the geometrical arrangement of the physical antennas 110 to each other and represents a phase shift of a specific antenna relative to a reference antenna such as the first antenna 110a. Hence, for the virtual antennas 120a, .. and their associated channel vector elements, the phase factor $k_1$, .. has to be chosen appropriately depending on the physical antenna setup 110.

I.e., for a linear array of antennas, another phase factor should be used than for a circular array.

Preferably, said extended channel vector $\mathbf{h}_{VA,0}$ is obtained based on the equation:

$$\mathbf{h}_{VA,0} = \begin{bmatrix} \mathbf{h}^T & h_0 \exp(jk_1\pi\sin\theta) & \cdots & h_0 \exp[jk_M\pi\sin\theta] \end{bmatrix}^T,$$

wherein $k_1$ is a phase factor corresponding to the first virtual antenna 120a of said arrangement 120 of virtual antennas 120, wherein $k_M$ is a phase factor corresponding to the $M$-th virtual antenna 120m, θ is said direction of arrival.

Finally, in step 240 (Figure 4), a process of spatial interference suppression is performed based on said extended channel vector $\mathbf{h}_{VA,0}$.

For this purpose, according to an embodiment, a weighting term for said step of spatial interference suppression 240 is determined based on the equation

$$\mathbf{w}^H = \mathbf{h}_{VA,0}{}^H (\mathbf{h}_{VA,0}\mathbf{h}_{VA,0}{}^H + \mathbf{H}_{VA,i}\mathbf{H}_{VA,i}{}^H + \sigma^2\mathbf{I})^{-1},$$

wherein $\mathbf{h}_{VA,0}$ is said extended channel vector, wherein $\mathbf{h}_{VA,0}{}^H$ is the Hermitian extended channel vector, wherein $\mathbf{H}_{VA,i}$ is a channel response matrix associated with interference, wherein $\mathbf{H}_{VA,i}{}^H$ *is* the Hermitian channel response matrix of interference, wherein $\sigma^2$ represents the variance of additive white Gaussian noise, AWGN, and wherein I represents the identity matrix.

The above explained determination of the weighting vector is based on the following considerations:

For the MIMO system according to Fig. 6, the MIMO system equation is given by:

$$\mathbf{y} = \mathbf{Hs} + \mathbf{n} = \begin{bmatrix} \mathbf{h}_0 & \mathbf{h}_1 & \cdots & \mathbf{h}_{Q-1} \end{bmatrix} \cdot \begin{bmatrix} s_0 \\ s_1 \\ \vdots \\ s_{Q-1} \end{bmatrix} + \mathbf{n}$$

$$= \begin{bmatrix} h_{1,0} \\ h_{2,0} \\ \vdots \\ h_{K,0} \end{bmatrix} \cdot s_0 + \begin{bmatrix} h_{1,1} \\ h_{2,1} \\ \vdots \\ h_{K,1} \end{bmatrix} \cdot s_1 + \cdots + \begin{bmatrix} h_{1,Q-1} \\ h_{2,Q-1} \\ \vdots \\ h_{K,Q-1} \end{bmatrix} \cdot s_{Q-1} + \begin{bmatrix} n_1 \\ n_2 \\ \vdots \\ n_K \end{bmatrix},$$

Wherein **H** is the MIMO channel matrix, s is the signal vector of transmitted signals, n is a noise vector, and **y** is a receive vector as obtained at the receiver 100.

The classical Wiener-Hopf solution allows estimating the useful signal by minimizing the square root of error with respect to the pilot signalling. It holds

$$\mathbf{w}_{WH} = \mathbf{R}_{yy}{}^{-1} = E[\mathbf{yy}^H]^{-1}\mathbf{h}_0 .$$

Being denoted as Minimal Mean Square Error (MMSE) algorithm, the above equation can be approximated as

$$\mathbf{w}_{WH} \approx \mathbf{w} = (\sum_{i=0}^{Q-1} E_{s_i} \mathbf{h}_i \mathbf{h}_i{}^H + \sigma^2\mathbf{I})^{-1}\mathbf{h}_0$$

$$= (E_{s_0} \mathbf{h}_0 \mathbf{h}_0^H + \sum_{i=1}^{Q-1} E_{s_i} \mathbf{h}_i \mathbf{h}_i^H + \sigma^2 \mathbf{I})^{-1} \mathbf{h}_0$$

$$= (\mathbf{h}_0 \mathbf{h}_0^H + \sum_{i=1}^{Q-1} \mathbf{h}_i \mathbf{h}_i^H + \sigma^2 \mathbf{I})^{-1} \mathbf{h}_0 \, ,$$

where $\sigma^2$ denotes the variance of AWGN, the unity transmit power is assumed, namely $E_{si} \equiv 1$.

The use of the extended channel vector $\mathbf{h}_{VA,0}$ - in contrast to the conventional channel vector h - advantageously enables to perform a more sophisticated spatial interference suppression in that the introduction of at least one virtual antenna 120a (Figure 3), preferably more than one virtual antennas 120a, .., 120m, provides several degrees of freedom for obtaining a weighting term that is required for the step of spatial interference suppression.

According to a preferred embodiment, the method according to the embodiment explained with reference to Figure 4 is preferably performed in such situations, where a signal to noise plus interference ratio (SINR) determined by said base station BS (Figure 3) is below a predetermined threshold.

I.e., whenever a base station BS1, BS2, BS3, BS4, BS5 considers a particular signal to noise plus interference ratio as obtained for a communication with one of its mobile terminals is considered to be too bad, the inventive addition of at least one virtual antenna and the spatial interference suppression based on an extended channel vector can be performed, e.g. according to the procedure illustrated with reference to Fig. 4.

By applying this method, a respective base station BS may advantageously avoid to repeatedly reallocate radio resources to its mobile terminal thus introducing overhead. Instead, it can rather try to improve the SINR on its currently used frequency band thus avoiding reallocating a frequency band.

For instance, in the context of Figure 2a, which depicts frequency allocation of a third frequency band that may be used by the five independent communications systems, mobile terminal 10a of base station BS1 suffers from interference which is introduced by the radio communications of the system comprising base station BS3 and its mobile terminal 30b.

Instead of reallocating radio resources for mobile terminal 10a, base station BS1 may advantageously perform the method explained above with reference to Figure 4. I. e., base station BS1 may continue to use the same radio resource which has been allocated to its mobile terminal 10a previously. It may try to mitigate the interference imparted on mobile terminal 10a by system BS3, 30b by means of applying the concept of virtual antennas for obtaining an extended channel vector that enables to perform a more sophisticated spatial interference suppression, cf. step 240 of Figure 4.

Likewise, with the scenario of Figure 2b, base station BS3 may apply the inventive principle of improved spatial interference suppression instead of simply reallocating radio resources to its terminal 30b which suffers from interference resulting from mobile terminal 20b of base station BS2.

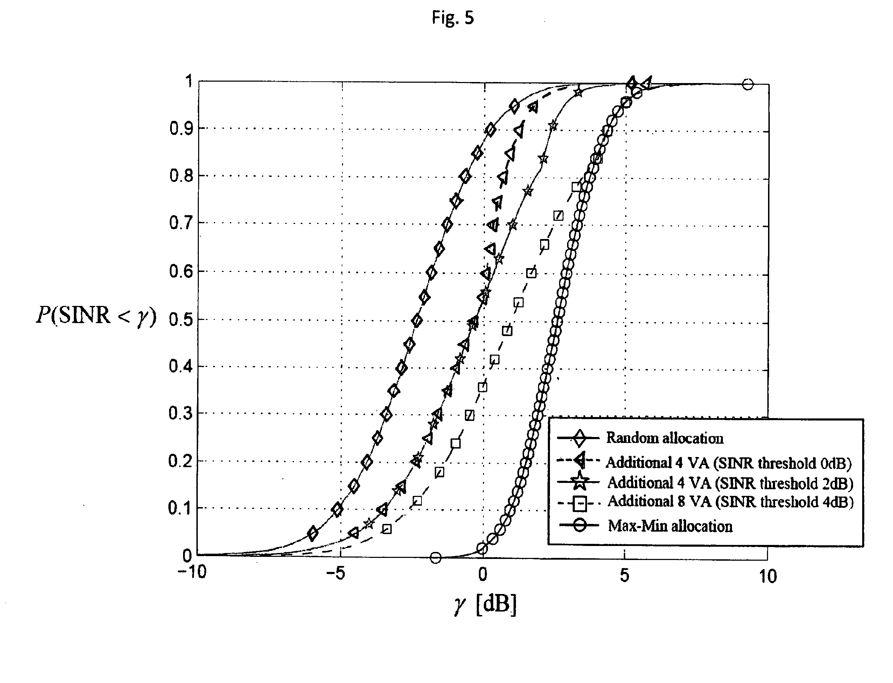

Figure 5 depicts a distribution of a signal to noise plus interference ratio for various configurations of the communications infrastructure according to Figure 1.

A first graph denoted by rhombus-shaped elements in Figure 5 depicts the SINR situation for a random allocation, i. e. as presently used by conventional independent communications systems.

The further graph denoted by circle-shaped elements represents an optimum allocation of radio resources of the three frequency bands available for the communications infrastructure of Figure 1, which can usually not be attained, since the communication systems operate independently of each other.

A graph depicted by triangle-shaped elements in Figure 5 represents the signal to noise plus interference ratio in a case where each base station BS1, BS2, BS3, BS4, BS5 is operated according to the method of Figure 4 based on four virtual antennas and a SINR threshold of 0 dB. That is, this situation is given, if each of the base stations BS1, BS2, BS3, BS4, BS5 applies the inventive method of obtaining an extended channel vector for spatial interference suppression, whenever a detected signal to interference plus noise ratio involved with a communication with one of its mobile terminals falls below 0 dB.

The further graph of Figure 5 which is depicted by star-shaped elements is also obtained by applying the inventive principle in each base station under the assumption of four virtual antennas. However, in contrast to the triangle-shaped graph, the star-shaped graph is based on applying the inventive method, whenever the SINR falls below a predetermined threshold of 2 dB.

The further graph which is depicted by square-shaped elements in Figure 5 represents the signal to noise plus interference ratio as obtained by applying the inventive method based on the introduction of eight virtual antennas and a SINR threshold for applying the inventive method of 4 dB.

Although in the context of the aforementioned embodiments, the receiving method has been explained with reference to the receiver 100 of the base station BS, it is also possible to apply the inventive principle of determining an extended channel vector and performing spatial interference suppression within receivers of further communications devices, preferably mobile terminals, as long as the respective receiver comprises two or more physical antennas.

Obviously, the introduction of one or more virtual antennas can be performed with any receiving device and is not limited to base stations or mobile terminals.

The receiving method according to the embodiments is particularly well-suited for application within cognitive radio systems, i.e. such radio communications systems which operate independently of each other and which particularly perform a radio resource allocation independently of further communications systems. For instance, Figure 1 may be interpreted to depict five different cognitive radio systems, each of which comprises a base station BS1, BS2, BS3, BS4, BS5 having a corresponding radio frequency coverage area 10, 20, 30, 40, 50 and associated mobile terminals.

It is particularly preferred to apply the inventive determination of the extended channel vector associated with the introduction of virtual antennas only if a signal to noise plus interference ratio falls below a predetermined threshold. However, applying the inventive method mitigates spatial interference without the need to reallocate radio resources by the involved communications systems.

According to a further embodiment, during operation of a communications system, i.e. base station BS1 and its mobile terminals 10a, 10b (Figure 1), in a first step, interference may be detected and a signal to noise plus interference ratio may be determined. This can be achieved by applying per se known methods.

If the signal to noise plus interference ratio for a given mobile terminal 10b does not satisfy a predetermined criterion, e.g. a defined threshold, then the virtual antenna-based spatial interference suppression algorithm according to the embodiments can be applied to improve the signal to noise plus interference ratio without changing the system radio resource configuration.

In a next step, the signal to noise plus interference ratio may be evaluated again, and it can be checked, whether the predetermined requirement is satisfied or not. If not, finally the base station BS1 can try to reallocate the mobile terminal 10a to another radio resource.

However, if the predetermined requirement for SINR has been satisfied after applying the inventive method of virtual antenna-based spatial interference suppression, there is no necessity to reallocate radio resources.

For a communications scenario as depicted by Figure 1, which comprises several independent communications systems, the aforementioned steps can also be performed iteratively for each of the communications systems, until a satisfactory resource allocation on a global basis is attained.

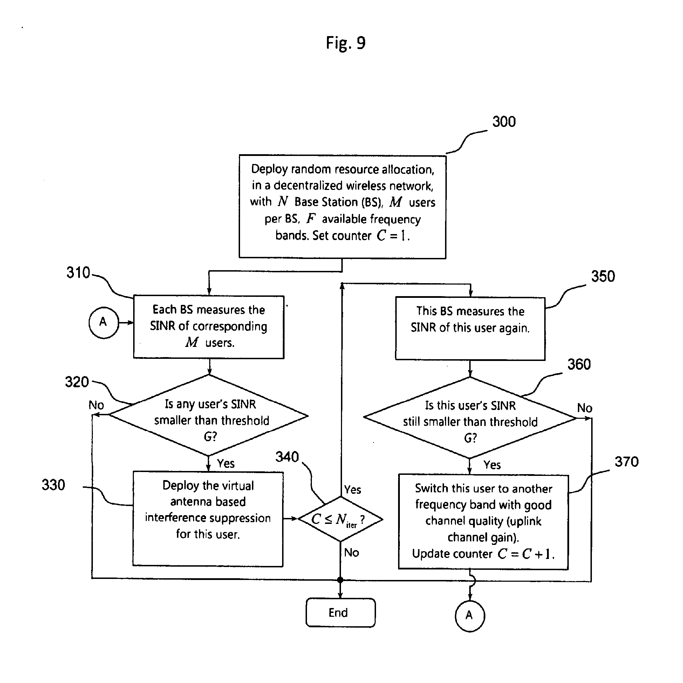

Fig. 9 depicts a flow-chart of a further preferred embodiment.

In a first step 300, a random resource allocation in a decentralized wireless network with $N = 5$ base stations BS1, .., BS5, $M$ many users (e.g., mobile terminals) per base station, and F many available frequency bands is deployed. Insofar, the resource allocation of step 300 is e.g. applicable to the systems of Fig. 1. Additionally, in step 300, a counter variable C is set: C =1.

After that, in step 310, each base station BS1, BS2, .. measures the SINR of its corresponding M many users or mobile terminals 10a, 10b, .., respectively.

In step 320, it is determined whether any user's SINR is smaller than a predetermined threshold G. If this is not the case, no further actions are taken since the SINR is considered sufficient. If, however, any user's SINR is below the threshold G, the process is continued with step 330.

In step 330, the virtual antenna based interference suppression already explained above with reference to Fig. 4 is deployed for this user.

Subsequently, in step 340, it is checked whether the counter variable C is less or equal than a predetermined number of iterations $N_{iter}$. If C exceeds $N_{iter}$, the process ends. Otherwise, the process continues with step 350, wherein the SINR associated with the specific user is assessed again. In step 360, it is checked, whether the specific user's SINR is still smaller than the predetermined threshold G. If not, the process ends. If yes, the respective user / his mobile terminal is re-allocated to another radio resource e.g. another frequency band by the base station in step 370. After that, the process restarts, cf. the entry point "A" of Figure 9.

The embodiment explained above with reference to Figure 8 represents a combination of the virtual antenna approach according to Fig. 4 and a re-allocation of radio resources such as switching a frequency band.

Apparently, the combination of the virtual antenna approach according to Fig. 4 and a re-allocation of radio resources in case of no substantial SINR improvement is advantageous, since it only requires re-allocation of radio resources if the interference suppression by means of introducing virtual antennas does not yield a substantial improvement of SINR.

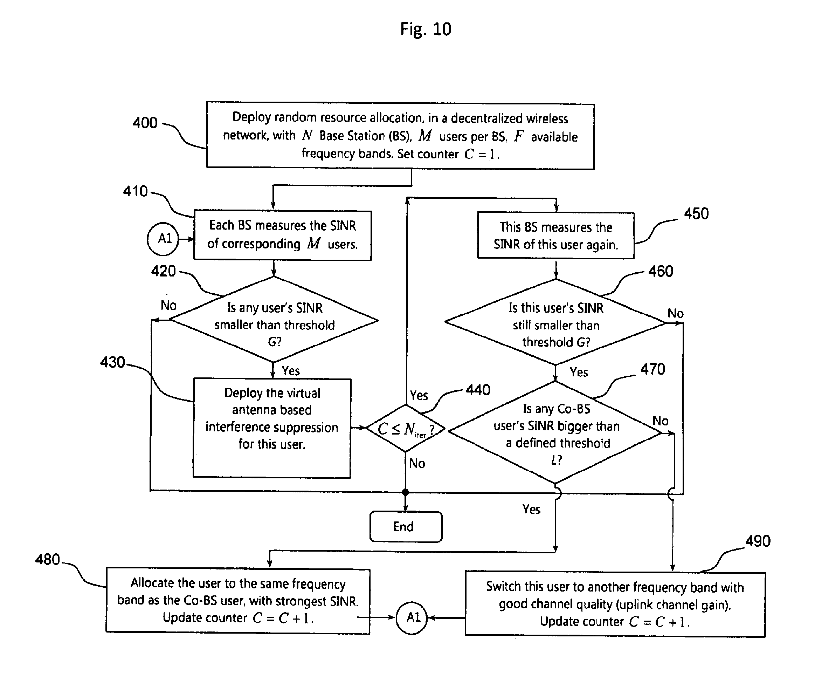

Fig. 10 depicts a flow-chart of a further preferred embodiment, which represents an extension of the embodiment according to Fig. 9.

In a first step 400, a random resource allocation in a decentralized wireless network with N =5 base stations BS1, .., BS5 (cf. Fig. 1), M many users, e.g. mobile terminals 10a, .., per base station, and F many available frequency bands is deployed. Insofar, the resource allocation of step 400 is e.g. applicable to the systems of Fig. 1. Additionally, in step 400, a counter variable C is set: $C=1$.

After that, in step 410, each base station BS1, BS2, .. measures the SINR of its corresponding M many users or mobile terminals 10a, 10b, .., respectively. Of course, instead of the SINR, any other suitable quality measure characterizing communications performance associated with the mobile terminals may be employed.

In step 420, it is determined whether any user's / mobile terminal's SINR is smaller than a predetermined threshold G. If this is not the case, no further actions are taken since the SINR is considered sufficient. If, however, any user's SINR, particularly, for exemplary purposes, the SINR of a first specific mobile terminal 10a, is below the threshold G, the process is continued with step 430.

In step 430, the virtual antenna based interference suppression already explained above with reference to Fig. 4 is deployed for the first specific mobile terminal 10a.

Subsequently, in step 440, it is checked whether the counter variable C is less or equal than a predetermined number of iterations $N_{iter}$. If C exceeds $N_{iter}$, the process ends. Otherwise, the process continues with step 450, wherein the SINR associated with the specific user / first mobile terminal 10a is assessed again. In step 460, it is checked, whether the specific user's SINR is still smaller than the predetermined threshold G. If not, the process ends, because an improvement regarding SINR of the specific user has been achieved.

If yes, i.e. if the first specific mobile terminal's SINR is still smaller than the predetermined threshold G, step 470 is executed, wherein the receiver 100 determines whether the SINR of any Co-BS user (i.e., any other user/mobile terminal 10b that is also associated with the receiver 100 or its base station BS1) is bigger than a predefined second threshold L. If so, the receiver 100 allocates in step 480 said first specific mobile terminal 10a to the same radio resource, preferably the same frequency band, as the specific second mobile terminal 10b so that the Co-BS terminals 10a, 10b share the same frequency band.

If, in step 470, it is determined that there is no Co-BS user of the same receiver 100 or its base station BS1 with a SINR being bigger than the predefined second threshold L, step 490 is performed, which reallocates the terminal 10a to another frequency band. After the steps 480, 490, the process is re-iterated, cf. the entry point A1.

The operating principle of the embodiment according to Fig. 10 can be summarized as follows: after deploying the virtual antenna solution (steps 200 to 240 of Fig. 4) for a certain user/mobile terminal 10a, if the SINR of this terminal l0a is still inadequate, instead of the immediate frequency band switch (step 370 of Fig. 9), the receiver 100 will check (step 470 of Fig. 10), whether another Co-BS terminal lOb with comparatively or even extremely good SINR does exist by introducing said second threshold L, wherein e.g. L=10dB. If this happens, it indicates that the frequency band currently used by terminal lOb is not overloaded or the user distribution is fine. Hence, it allows the receiver 100 or its base station BS1, respectively, to allocate the terminal 10a, too, to this frequency band. Although both Co-BS terminals 10a, lOb are thus in the same frequency band, they can still be spatially separated, by deploying an embodiment of the virtual antenna-based interference mitigation such as e.g. according to Fig. 4, if necessary. Hence, further performance improvement can be expected.

Although the embodiments that have been explained with respect to Fig. 9, 10 mention that each base station (BS) of the plurality of communications systems measures SINR values of its terminals, cf. steps 310, 410, it is obvious that the embodiments may also be performed by one single base station such as BS1 of Figure 1, or its receiver 100, respectively, too. I.e., the advantages of the inventive principle can already be attained if a receiver 100 of only one of a plurality of communications systems performs the steps according to Fig. 4 and/or 9 and/or 10. Of course, interference mitigation according to the embodiments within a single receiver 100 is also possible for those cases, where the interference does not result from further, possibly similar communications systems BS2, 20a, 20b but rather from other sources of electromagnetic radiation.

The same holds true for only assessing SINR of a specific terminal l0a and, if necessary re-allocating said specific terminal 10a, to another radio resource. I.e., it is not necessary to consider all terminals 10a, 10b associated with a certain receiver 100 or its base station BS1.

According to one aspect of the embodiments, the interference suppression, which is based on employing an extended channel vector $\mathbf{h}_{VA,0}$ that is determined by considering one or more virtual antennas 120a, .. advantageously enables to re-shape an antenna characteristic of the receiver 100, which can e.g. lead to main lobes covering a smaller angular range thus offering higher spatial selectivity regarding received signals. E.g., in the scenario of Figure 2a, the receiver 100 of base station BS1 may reshape its antenna characteristic 11 so as to obtain a main lobe in the direction of terminal 10a, the angular width is smaller than that depicted by Figure 2a. By such a smaller main lobe (not shown), reception of interference signals from interfering mobile terminal 30b may be reduced.

The inventive principle may be applied to any device receiving electromagnetic waves via a plurality of receive channels. The inventive principle may even be applied to any device receiving electromagnetic waves via a single physical receive channel, e.g. a single physical antenna, as long as DoA information on interesting received signals is provided in some way.

The description and drawings merely illustrate the principles of the invention. It will thus be appreciated that those skilled in the art will be able to devise various arrangements that, although not explicitly described or shown herein, embody the principles of the invention and are included within its scope being provided by the claims.

The functions of the various elements shown in the FIGs., including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method of operating a receiver (100) having a plurality of receive channels, each of which is associated with a physical antenna (110a) said method comprising the steps:

   - estimating (200) a direction of arrival $\theta$ of a signal received by said receiver (100),
   - determining (210) a channel vector h representing said plurality of receive channels of said receiver (100),

   and **characterized by**

   - determining (220) a mean channel response $h_0$ based on said channel vector **h**,
   - providing (230) an extended channel vector $\mathbf{h}_{VA,0}$ which comprises the elements of said channel vector **h** and at least one further channel vector element $h_k$, wherein said further channel vector element $h_k$ depends on said direction of arrival $\theta$ and on said mean channel response $h_0$ and represents a virtual antenna (120a) that is introduced for said receiver (100),
   - performing (240) a step of spatial interference suppression based on said extended channel vector $\mathbf{h}_{VA,0}$, and

   determining at said receiver (100) a quality measure, preferably a SINR value, characterizing communications performance associated with a specific first mobile terminal (10a), and wherein the steps of determining (220) a mean channel response $h_0$, providing (230) an extended channel vector $h_{VA,0}$, and performing (240) a step of spatial interference suppression based on said extended channel vector $\mathbf{h}_{VA,0}$ are only performed if said SINR value is determined (320) to be smaller than a predetermined first threshold $G$.

2. Method according to claim 1, wherein said mean channel response $h_0$ is determined based on the equation:

$$h_0 = \frac{1}{K}\sum_{k=1}^{K}\mathbf{h}[k]$$ , wherein $K$ is a number of physical receive channels of said receiver (100), $\mathbf{h}[k]$ is the $k$-th element of said channel vector **h**.

3. Method according to one of the preceding claims, wherein a further channel vector element $h_k$ representing a virtual antenna (120a) is determined based on the equation:

   $h_k = h_0\, exp(jk_1\pi\, sin\,\theta)$, wherein $j$ is the imaginary unit, $k_1$ is a phase factor corresponding to said virtual antenna (120a), and $\theta$ is said direction of arrival.

4. Method according to one of the preceding claims, wherein said extended channel vector $\mathbf{h}_{VA,0}$ is obtained based

on the equation:

$\mathbf{h}_{VA,0} = [\mathbf{h}^T\ h_0\ exp(jk_1\pi\ sin\ \theta) \cdots h_0\ exp[jk_M\pi\ sin\ \theta]^T$, *wherein* $k_1$ is a phase factor corresponding to a first one (120a) of said virtual antennas (120a, .., 120m), wherein $k_M$ is a phase factor corresponding to an *M*-th virtual antenna (120m), $\theta$ is said direction of arrival.

5. Method according to one of the preceding claims, wherein a weighting term for said step of spatial interference suppression (240) is determined based on the equation:

$\mathbf{w}^H = \mathbf{h}_{VA,0}{}^H(\mathbf{h}_{VA,0}\mathbf{h}_{VA,0}{}^H + H_{VA,i}H_{VA,i}{}^H + \sigma^2 I)^{-1}$, wherein $H_{VA,0}$ is said extended channel vector $\mathbf{h}_{VA,0}$, wherein $\mathbf{h}_{VA,0}{}^H$ is the Hermitian extended channel vector, wherein $\mathbf{H}_{VA,i}$ is a channel response matrix associated with interference,
wherein $\mathbf{H}_{VA,i}{}^H$ is the Hermitian channel response matrix of interference, wherein $\sigma^2$ represents the variance of additive white Gaussian noise, AWGN, and wherein **I** represents the identity matrix.

6. Method according to one of the preceding claims, wherein said receiver (100) has four physical receive channels corresponding with four physical antennas (110a, ..), and wherein four virtual antennas (120a, ..) are assigned to said receiver (100).

7. Method according to one of the preceding claims, wherein the receiver (100) reallocates (370) the mobile terminal (10a) to another radio resource, preferably another frequency band, if the quality measure associated with the specific mobile terminal (10a) has not improved by a predetermined amount after iteratively performing said steps of determining (220) a mean channel response $h_0$,
providing (230) an extended channel vector $h_{VA,0}$, and performing (240) a step of spatial interference suppression based on said extended channel vector $h_{VA,0}$ for a predetermined number of iterations.

8. Method according to one of the preceding claims, wherein the receiver (100) determines (470) a quality measure, preferably a SINR value, characterizing communications performance associated with a second specific mobile terminal (10b) associated with said receiver (100), and wherein, if said quality measure exceeds a predetermined second threshold *L*, the receiver (100) allocates (480) said first specific mobile terminal (10a) to the same radio resource, preferably the same frequency band, as the specific second mobile terminal (10b).

9. Method of operating a plurality of independent communications systems (BS1, 10a, 10b; BS2, 20a, 20b; ..), each of which comprises at least one receiver (100) and an associated terminal (10a; 20a), wherein at least one receiver (100) of said plurality of independent communications systems performs a method according to one of the preceding claims.

10. Receiver (100) for receiving a signal via a plurality of receive channels, each of which is associated with a physical antenna (110a), said receiver (100) comprising: processing means (130) configured to:

   - estimate (200) a direction of arrival $\theta$ of a signal received by said receiver (100),
   - determine (210) a channel vector **h** representing a plurality of receive channels of said receiver (100), and **characterized in** being configured to
   - determine (220) a mean channel response $h_0$ based on said channel vector **h**,
   - provide (230) an extended channel vector $\mathbf{h}_{VA,0}$ which comprises the elements of said channel vector **h** and at least one further channel vector element $h_k$, wherein said further channel vector element $h_k$ depends on said direction of arrival $\theta$ and on said mean channel response $h_o$ and represents a virtual antenna (120a) of said receiver (100), and to
   - perform (240) a step of spatial interference suppression based on said extended channel vector $\mathbf{h}_{VA,0}$,

   wherein said receiver (100) is configured to determine (310) a quality measure, preferably a SINR value, characterizing communications performance associated with a specific first mobile terminal (10a), and to perform the steps of determining (220) a mean channel response $h_0$, providing (230) an extended channel vector $\mathbf{h}_{VA,0}$, and performing (240) a step of spatial interference suppression based on said extended channel vector $\mathbf{h}_{VA,0}$ only if said SINR value is determined (320) to be smaller than a predetermined first threshold *G*.

11. Receiver (100) according to claim 10, wherein said receiver (100) is configured to perform the method according to one of the claims 2 to 9.

**12.** Receiver (100) according to claim 10 or 11, wherein the receiver (100) is configured to reallocate (370) the mobile terminal (10a) to another radio resource, preferably another frequency band, if the quality measure associated with the specific mobile terminal (10a) has not improved by a predetermined amount after iteratively performing said steps of determining (220) a mean channel response $h_0$, providing (230) an extended channel vector $\mathbf{h}_{VA,0}$, and performing (240) a step of spatial interference suppression based on said extended channel vector $\mathbf{h}_{VA,0}$ for a predetermined number of iterations.

**13.** Receiver according to one of the claims 10 to 12, wherein the receiver (100) is configured to determine (470) a quality measure, preferably a SINR value, characterizing communications performance associated with a second specific mobile terminal (10b) associated with said receiver (100), and wherein the receiver (100) is configured to, if said quality measure exceeds a predetermined second threshold $L$, allocate (480) said first specific mobile terminal (10a) to the same radio resource, preferably the same frequency band, as the specific second mobile terminal (10b).

**Patentansprüche**

**1.** Verfahren zum Betreiben eines Empfängers (100) mit einer Mehrzahl von Empfangskanälen, von denen ein jeder mit einer physischen Antenne (110a) assoziiert ist, wobei das besagte Verfahren die folgenden Schritte umfasst:

    - Schätzen (200) einer Ankunftsrichtung θ eines an dem besagten Empfänger (100) empfangenen Signals,
    - Ermitteln eines (210) Kanalvektors h, welcher die besagte Mehrzahl von Empfangskanälen des besagten Empfängers (100) darstellt,

und **gekennzeichnet durch**

    - Ermitteln (220) einer mittleren Kanalantwort $h_0$ auf der Basis des besagten Kanalvektors h,
    - Bereitstellen (230) eines erweiterten Kanalvektors $h_{VA,0}$, welcher die Elemente des besagten Kanalvektors h und mindestens ein weiteres Kanalvektorelement $h_k$ umfasst, wobei das besagte weitere Kanalvektorelement $h_k$ von der besagten Ankunftsrichtung θ und von der besagten mittleren Kanalantwort $h_c$ abhängt und eine virtuelle Antenne (120a), welche für den besagten Empfänger (100) eingesetzt wird, darstellt,
    - Durchführen (240) eines Schritts der Unterdrückung räumlicher Interferenzen auf der Basis des besagten erweiterten Kanalvektors $h_{VA,0}$, und
    - Ermitteln, an dem besagten Empfänger (100), eines Qualitätsmaßes, vorzugsweise eines SINR-Wertes, welches die mit einem spezifischen ersten mobilen Endgerät (10a) assoziierte Kommunikationsleistung kennzeichnet, und wobei die Schritte des Ermittelns (220) einer mittleren Kanalantwort $h_o$, des Bereitstellens (230) eines erweiterten Kanalvektors $h_{VA,0}$ und des Durchführens (240) eines Schritts der Unterdrückung räumlicher Interferenzen auf der Basis des besagten erweiterten Kanalvektors $h_{VA,0}$ nur durchgeführt werden, wenn ermittelt (320) wird, dass der besagte SINR-Wert kleiner als ein vorbestimmter erster Grenzwert G ist.

**2.** Verfahren nach Anspruch 1, wobei die besagte mittlere Kanalantwort $h_0$ auf der Basis der folgenden Gleichung ermittelt wird:

$$h_c = \frac{1}{K} \sum_{k}^{K} = 1 \ h[k]$$

wobei K eine Anzahl von physischen Empfangskanälen des besagten Empfängers (100) ist, und h[k] das $k$-te Element des besagten Kanalvektors **h** ist.

**3.** Verfahren nach einem der vorstehenden Ansprüche, wobei ein weiteres Kanalvektorelement $h_k$, welches eine virtuelle Antenne (120a) darstellt, auf der Basis der folgenden Gleichung ermittelt wird:

    $h_k = h_0 \exp(jk_1 \pi \sin\theta)$, wobei $j$ die imaginäre Einheit ist, $k_1$ ein der besagten virtuellen Antenne (120a) entsprechender Phasenfaktor ist, und θ die besagte Ankunftsrichtung ist.

**4.** Verfahren nach einem der vorstehenden Ansprüche, wobei der besagte erweiterte Kanalvektor $h_{VA,0}$ auf der Basis der folgenden Gleichung erhalten wird:

$h_{VA,0} = [h^T \ h_0\exp(jk_1\pi\sin\theta) \ ... \ h_0\exp[jk_M\pi\sin\theta]]^T$, wobei $k_1$ ein einer ersten (120a) der besagten virtuellen Antennen (120a, .., 120m) entsprechender Phasenfaktor ist, wobei $k_M$ ein einer M-ten virtuellen Antenne (120m) entsprechender Phasenfaktor ist, und $\theta$ die besagte Ankunftsrichtung ist.

5. Verfahren nach einem der vorstehenden Ansprüche, wobei ein Gewichtungsausdruck für den besagten Schritt der Unterdrückung (240) räumlicher Interferenzen auf der Basis der folgenden Gleichung ermittelt wird:

$\mathbf{w}^H = h_{VA,0}{}^H(h_{VA,0}h_{VA,0}{}^H + \mathbf{H}_{VA,i} \ \mathbf{H}_{VA,i}{}^H + \sigma^2 I)^{-1}$, wobei $h_{VA,0}$ der besagte erweiterte Kanalvektor $\mathbf{h}_{VA,0}$ ist, wobei $h_{VA,0}{}^H$ der erweiterte Hermitesche Kanalvektor ist, wobei $H_{VA,i}$ eine mit der Interferenz assoziierte Kanalantwortmatrix ist, wobei $H_{VAi}{}^H$ die Hermitesche Kanalantwortmatrix der Interferenz ist, wobei $\sigma^2$ die Varianz des additiven weißen Gaußschen Rauschens, AWGN, darstellt, und
wobei I die Einheitsmatrix darstellt.

6. Verfahren nach einem der vorstehenden Ansprüche, wobei der besagte Empfänger (100) vier physische Empfangskanäle aufweist, welche vier physischen Antennen (110a, ..) entsprechen, und wobei dem besagten Empfänger (100) vier virtuelle Antennen (120a, ..) zugeordnet werden.

7. Verfahren nach einem der vorstehenden Ansprüche, wobei der Empfänger (100) das mobile Endgerät (10a) einer anderen Funkressource, vorzugsweise einem anderen Frequenzband, neu zuteilt (370), wenn sich das mit dem spezifischen mobilen Endgerät (10a) assoziierte Qualitätsmaß nicht um eine vorgegebene Menge nach dem iterativen Durchführen der besagten Schritte des Ermittelns (220) eines mittleren Kanalantwort $h_0$, des Bereitstellens (230) eines erweiterten Kanalvektors $h_{VA,0}$ und des Durchführens (240) eines Schrittes der Unterdrückung räumlicher Interferenzen auf der Basis des besagten erweiterten Kanalvektors $h_{VA,0}$ für eine vorgegebene Anzahl von Iterationen verbessert hat.

8. Verfahren nach einem der vorstehenden Ansprüche, wobei der Empfänger (100) ein Qualitätsmaß, vorzugsweise einen SINR-Wert, ermittelt (470), welches die mit einem zweiten spezifischen mobilen Endgerät (10b), das mit dem besagten Empfänger (100) assoziiert ist, assoziierte Kommunikationsleistung kennzeichnet, und wobei, wenn das besagte Qualitätsmaß einen vorgegebenen zweiten Grenzwert L überschreitet, der Empfänger das besagte erste spezifische mobile Endgerät (10a) derselben Funkressource, vorzugsweise demselben Frequenzband, wie das spezifische zweite mobile Endgerät (10b) zuteilt (480).

9. Verfahren zum Betreiben einer Mehrzahl von unabhängigen Kommunikationssystemen (BS1, 10a, 10b; BS2, 20a, 20b; ..), von denen ein jedes mindestens einen Empfänger (100) und ein assoziierte Endgerät (10a; 20a) umfasst, wobei mindestens ein Empfänger (100) der besagten Mehrzahl von unabhängigen Kommunikationssystemen ein Verfahren nach einem der vorstehenden Ansprüche durchführt.

10. Empfänger (100) zum Empfangen eines Signals über eine Mehrzahl von Empfangskanälen, von denen ein jeder mit einer physischen Antenne (110a) assoziiert ist, wobei der besagte Empfänger (100) Verarbeitungsmittel (130) für das Durchführen der folgenden Schritte umfasst:

- Schätzen (200) einer Ankunftsrichtung $\theta$ eines an dem besagten Empfänger (100) empfangenen Signals,
- Ermitteln (210) eines Kanalvektors h, welcher die besagte Mehrzahl von Empfangskanälen des besagten Empfängers (100) darstellt, und **dadurch gekennzeichnet, dass** sie für das Durchführen der folgenden Schritte konfiguriert sind:
- Ermitteln (220) einer mittleren Kanalantwort $h_0$ auf der Basis des besagten Kanalvektors **h**,
- Bereitstellen (230) eines erweiterten Kanalvektors $h_{VA,0}$, welcher die Elemente des besagten Kanalvektors h und mindestens ein weiteres Kanalvektorelement $h_k$ umfasst, wobei das besagte weitere Kanalvektorelement $h_k$ von der besagten Ankunftsrichtung $\theta$ und von der besagten mittleren Kanalantwort $h_0$ abhängt und eine virtuelle Antenne (120a), welche für den besagten Empfänger (100) eingesetzt wird, darstellt, und
- Durchführen (240) eines Schritts der Unterdrückung räumlicher Interferenzen auf der Basis des besagten erweiterten Kanalvektors $h_{VA0}$,

wobei der besagte Empfänger (100) dafür konfiguriert ist, ein Qualitätsmaß, vorzugsweise einen SINR-Wert, welches die mit einem spezifischen ersten mobilen Endgerät (10a) assoziierte Kommunikationsleistung kennzeichnet, zu ermitteln (310) und die Schritte des Ermittelns (220) einer mittleren Kanalantwort $h_c$, des Bereitstellens (230) eines erweiterten Kanalvektors $h_{VA,0}$ und des Durchführens (240) eines Schritts der Unterdrückung räumlicher Interferenzen auf der Basis des besagten erweiterten Kanalvektors $\mathbf{h}_{VA,0}$ nur dann durchzuführen, wenn ermittelt (320) wurde, dass der besagte SINR-Wert kleiner als ein vorbestimmter erster Grenzwert G ist.

**11.** Empfänger (100) nach Anspruch 10, wobei der besagte Empfänger (100) für das Durchführen des Verfahrens gemäß einem der Ansprüche 2 bis 9 konfiguriert ist.

**12.** Empfänger (100) nach Anspruch 10 oder 11, wobei der Empfänger (100) dafür konfiguriert ist, das mobile Endgerät (10a) einer anderen Funkressource, vorzugsweise einem anderen Frequenzband, neu zuzuteilen (370), wenn sich das mit dem spezifischen mobilen Endgerät (10a) assoziierte Qualitätsmaß nicht um eine vorgegebene Menge nach dem iterativen Durchführen der besagten Schritte des Ermittelns (220) eines mittleren Kanalantwort $h_0$, des Bereitstellens (230) eines erweiterten Kanalvektors $h_{VA.0}$ und des Durchführens (240) eines Schrittes der Unterdrückung räumlicher Interferenzen auf der Basis des besagten erweiterten Kanalvektors $h_{VA.0}$ für eine vorgegebene Anzahl von Iterationen verbessert hat.

**13.** Empfänger nach einem der Ansprüche 10 bis 12, wobei der Empfänger (100) für das Ermitteln (470) eines Qualitätsmaßes, vorzugsweise eines SINR-Wertes, welches die mit einem zweiten spezifischen mobilen Endgerät (10b), das mit dem besagten Empfänger (100) assoziiert ist, assoziierte Kommunikationsleistung kennzeichnet, konfiguriert ist, und wobei der Empfänger (100) dafür konfiguriert ist, das besagte erste spezifische mobile Endgerät (10a) derselben Funkressource, vorzugsweise demselben Frequenzband, wie das spezifische zweite mobile Endgerät (10b) zuzuteilen (480), wenn das besagte Qualitätsmaß einen vorgegebenen zweiten Grenzwert L überschreitet.

## Revendications

**1.** Procédé de fonctionnement d'un récepteur (100) présentant une pluralité de canaux de réception, dont chacun est associé à une antenne physique (110a), ledit procédé comprenant les étapes suivantes :

- estimer (200) une direction d'arrivée θ d'un signal reçu par ledit récepteur (100),
- déterminer (210) un vecteur de canal h représentant ladite pluralité de canaux de réception dudit récepteur (100),

et **caractérisé par**

- la détermination (220) d'une réponse de canal moyenne $h_0$ sur la base dudit vecteur de canal h,
- la fourniture (230) d'un vecteur de canal étendu $h_{VA.0}$ qui comprend les éléments dudit vecteur de canal h et au moins un autre élément de vecteur de canal $h_k$, dans lequel ledit autre élément de vecteur de canal $h_k$ dépend de ladite direction d'arrivée θ, et de ladite réponse de canal moyenne $h_0$ et représente une antenne virtuelle (120a) qui est introduite pour ledit récepteur (100),
- la réalisation (240) d'une étape de suppression d'interférences spatiales sur la base dudit vecteur de canal étendu $h_{VA.0}$, et
- la détermination au niveau dudit récepteur (100) d'une mesure de qualité, de préférence une valeur SINR, caractérisant des performances de communications associées à un premier terminal mobile spécifique (10a), et dans lequel les étapes de détermination (220) d'une réponse de canal moyenne $h_c$, de fourniture (230) d'un vecteur de canal étendu $h_{VA.0}$, et de réalisation (240) d'une étape de suppression d'interférences spatiales sur la base dudit vecteur de canal étendu $h_{VA.0}$ ne sont réalisées que si ladite valeur SINR est déterminée (320) comme étant inférieure à un premier seuil *G* prédéterminé.

**2.** Procédé selon la revendication 1, dans lequel ladite réponse de canal moyenne h0 est déterminée sur la base de l'équation :

$$h_c = \frac{1}{K} \sum_{k} = 1 \ h[k]$$

dans laquelle K est un nombre de canaux de réception physiques dudit récepteur (100), h[k] est le *k*ème élément dudit vecteur de canal h.

**3.** Procédé selon l'une des revendications précédentes, dans lequel un autre élément de vecteur de canal $h_k$ représentant une antenne virtuelle (120a) est déterminé sur la base de l'équation :

$h_k = h_0 \exp(jk_1\pi\sin\theta)$, dans laquelle $j$ est l'unité imaginaire, $k_1$ est un facteur de phase correspondant à ladite antenne virtuelle (120a), et $\theta$ est ladite direction d'arrivée.

4. Procédé selon l'une des revendications précédentes, dans lequel ledit vecteur de canal étendu $h_{VA.0}$ est obtenu sur la base de l'équation :

$h_{VA.0} = [h^T\ h_0\exp(jk_1\pi\sin\theta) \ldots h_0\exp[jk_M\pi\sin\theta]]^T$, dans laquelle $k_1$ est un facteur de phase correspondant à une première antenne virtuelle (120a) parmi lesdites antennes virtuelles (120a, .., 120m), dans laquelle $k_M$ est un facteur de phase correspondant à une M$^{\text{ème}}$ antenne virtuelle (120m), $\theta$ est ladite direction d'arrivée.

5. Procédé selon l'une des revendications précédentes, dans lequel un terme de pondération pour ladite étape de suppression d'interférences spatiales (240) est déterminé sur la base de l'équation :

$w^H = h_{VA.0}{}^H(h_{VA.0}h_{VA.0}{}^H + H_{VA.i}H_{VA.i}{}^H + \sigma^2 I)^{-1}$, dans laquelle $h_{VA,0}$ est ledit vecteur de canal étendu $h_{VA.0}$, dans laquelle $h_{VA.0}H$ est le vecteur de canal étendu hermitien, dans laquelle $H_{VA,i}$ est une matrice de réponse de canal associée aux interférences, dans laquelle $H_{VA,i}{}^H$ est la matrice de réponse de canal hermitienne d'interférence, dans laquelle $\sigma^2$ représente la variance du bruit blanc gaussien additif, AWGN, et dans laquelle I représente la matrice d'identité.

6. Procédé selon l'une des revendications précédentes, dans lequel ledit récepteur (100) présente quatre canaux de réception physiques correspondant à quatre antennes physiques (110a, ..), et dans lequel quatre antennes virtuelles (120a, ..) sont attribuées audit récepteur (100).

7. Procédé selon l'une des revendications précédentes, dans lequel le récepteur (100) réaffecte (370) le terminal mobile (10a) à une autre ressource radio, de préférence une autre bande de fréquences, si la mesure de qualité associée au terminal mobile spécifique (10a) ne s'est pas améliorée selon une valeur prédéterminée après la réalisation itérative desdites étapes de détermination (220) d'une réponse de canal moyenne $h_c$, de fourniture (230) d'un vecteur de canal étendu $h_{VA0}$, et de réalisation (240) d'une étape de suppression d'interférences spatiales sur la base dudit vecteur de canal étendu $h_{VA0}$ pour un nombre prédéterminé d'itérations.

8. Procédé selon l'une des revendications précédentes, dans lequel le récepteur (100) détermine (470) une mesure de qualité, de préférence une valeur SINR, caractérisant des performances de communications associées à un deuxième terminal mobile spécifique (10b) associé audit récepteur (100), et dans lequel, si ladite mesure de qualité dépasse un deuxième seuil L prédéterminé, le récepteur (100) affecte (480) ledit premier terminal mobile spécifique (10a) à la même ressource radio, de préférence la même bande de fréquences, que celle du deuxième terminal mobile spécifique (10b).

9. Procédé de fonctionnement d'une pluralité de systèmes de communication indépendants (BS1, 10a, 10b ; BS2, 20a, 20b ; ..), chacun d'entre eux comprenant au moins un récepteur (100) et un terminal associé (10a ; 20a), dans lequel au moins un récepteur (100) de ladite pluralité de systèmes de communication indépendants exécute un procédé selon l'une des revendications précédentes.

10. Récepteur (100) pour recevoir un signal par l'intermédiaire d'une pluralité de canaux de réception, chacun d'entre eux étant associé à une antenne physique (110a), ledit récepteur (100) comprenant: des moyens de traitement (130) configurés pour :

   - estimer (200) une direction d'arrivée $\theta$ d'un signal reçu par ledit récepteur (100),
   - déterminer (210) un vecteur de canal h représentant une pluralité de canaux de réception dudit récepteur (100), et **caractérisé en ce qu'**il est configuré pour
   - déterminer (220) une réponse de canal moyenne $h_0$ sur la base dudit vecteur de canal h,
   - fournir (230) un vecteur de canal étendu $h_{VA.0}$ qui comprend les éléments dudit vecteur de canal h et au moins un autre élément de vecteur de canal $h_k$, dans lequel ledit autre élément de vecteur de canal $h_k$ dépend de ladite direction d'arrivée $\theta$, et de ladite réponse de canal moyenne $h_0$ et représente une antenne virtuelle (120a) dudit récepteur (100), et pour
   - réaliser (240) une étape de suppression d'interférences spatiales sur la base dudit vecteur de canal étendu $h_{VA.0}$,

dans lequel ledit récepteur (100) est configuré pour déterminer (310) une mesure de qualité, de préférence une valeur SINR, caractérisant des performances de communications associées à un premier terminal mobile spécifique (10a), et pour réaliser les étapes de détermination (220) d'une réponse de canal moyenne $h_c$, de fourniture (230) d'un vecteur de canal étendu $h_{VA.0}$, et de réalisation (240) d'une étape de suppression d'interférences spatiales sur la base dudit vecteur de canal étendu $h_{VA.0}$ seulement si ladite valeur SINR est déterminée (320) comme étant inférieure à un premier seuil G prédéterminé.

11. Récepteur (100) selon la revendication 10, dans lequel ledit récepteur (100) est configuré pour exécuter le procédé selon l'une des revendications 2 à 9.

12. Récepteur (100) selon la revendication 10 ou 11, dans lequel le récepteur (100) est configuré pour réaffecter (370) le terminal mobile (10a) à une autre ressource radio, de préférence une autre bande de fréquences, si la mesure de qualité associée au terminal mobile spécifique (10a) ne s'est pas améliorée selon une valeur prédéterminée après la réalisation itérative desdites étapes de détermination (220) d'une réponse de canal moyenne $h_0$, de fourniture (230) d'un vecteur de canal étendu $h_{VA.0}$, et de réalisation (240) d'une étape de suppression d'interférences spatiales sur la base dudit vecteur de canal étendu $h_{VA.0}$ pour un nombre prédéterminé d'itérations.

13. Récepteur selon l'une des revendications 10 à 12, dans lequel le récepteur (100) est configuré pour déterminer (470) une mesure de qualité, de préférence une valeur SINR, caractérisant des performances de communications associées à un deuxième terminal mobile spécifique (10b) associé audit récepteur (100), et dans lequel le récepteur (100) est configuré, si ladite mesure de qualité dépasse un deuxième seuil L prédéterminé, pour affecter (480) ledit premier terminal mobile spécifique (10a) à la même ressource radio, de préférence la même bande de fréquences, que celle du deuxième terminal mobile spécifique (10b).

Fig. 1

Fig. 2a

EP 2 398 159 B1

Fig. 2b

EP 2 398 159 B1

# Fig. 2c

EP 2 398 159 B1

Fig. 3

BS

110

120a    120

110a

120m

100

130

Fig. 4

200

210

220

230

240

EP 2 398 159 B1

Fig. 5

Fig. 6

EP 2 398 159 B1

Fig. 8

Fig. 7

**Fig. 9**

Deploy random resource allocation, in a decentralized wireless network, with $N$ Base Station (BS), $M$ users per BS, $F$ available frequency bands. Set counter $C = 1$. — 300

310 — Each BS measures the SINR of corresponding $M$ users. — A

This BS measures the SINR of this user again. — 350

320 — Is any user's SINR smaller than threshold $G$? — No

Is this user's SINR still smaller than threshold $G$? — 360 — No

330 — Deploy the virtual antenna based interference suppression for this user. — Yes

340 — $C \leq N_{iter}$? — Yes / No

Switch this user to another frequency band with good channel quality (uplink channel gain). Update counter $C = C + 1$. — 370 — Yes

End

A

EP 2 398 159 B1

26

Fig. 10

400 — Deploy random resource allocation, in a decentralized wireless network, with $N$ Base Station (BS), $M$ users per BS, $F$ available frequency bands. Set counter $C = 1$.

410 — A1 → Each BS measures the SINR of corresponding $M$ users.

450 — This BS measures the SINR of this user again.

420 — Is any user's SINR smaller than threshold $G$? — No / Yes

460 — Is this user's SINR still smaller than threshold $G$? — No / Yes

430 — Deploy the virtual antenna based interference suppression for this user.

440 — $C \leq N_{iter}$? — Yes / No

470 — Is any Co-BS user's SINR bigger than a defined threshold $L$? — No / Yes

End

480 — Allocate the user to the same frequency band as the Co-BS user, with strongest SINR. Update counter $C = C + 1$.

A1

490 — Switch this user to another frequency band with good channel quality (uplink channel gain). Update counter $C = C + 1$.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040104844 A1